# EUROPÄISCHE PATENTSCHRIFT

(11) **EP 3 590 323 B1**
(45) Veröffentlichungstag und Bekanntmachung des Hinweises auf die Patenterteilung: **07.09.2022**
(21) Anmeldenummer: 19183874.7
(22) Anmeldetag: 02.07.2019
(51) Int. Cl.: A01D 84/00, A01D 89/00

(54) **LANDWIRTSCHAFTLICHE VORRICHTUNG**
AGRICULTURAL DEVICE
DISPOSITIF AGRICOLE

(30) Priorität: 05.07.2018 DE 102018116297
(43) Veröffentlichungstag der Anmeldung: 08.01.2020
(73) Patentinhaber: Begemann, Carl-Ludwig, 26409 Wittmund (DE)
(72) Erfinder: Begemann, Carl-Ludwig, 26409 Wittmund (DE)
(74) Vertreter: Scheffler, Jörg

(56) Entgegenhaltungen:
- EP-A1- 1 252 814
- EP-A1- 1 306 003
- EP-A1- 3 238 526
- DE-A1- 3 922 695

## Beschreibung

Die Erfindung betrifft eine bei der Behandlung von Ernte- oder Halmgut, insbesondere in der Heu-, Silage- oder Strohernte einsetzbare mobile landwirtschaftliche Vorrichtung mit einem rotationsbeweglichen Aufnehmer für das Halmgut sowie mit einem Fördermittel zum Transport des Halmgutes von einer dem Aufnehmer zugewandten Ladeseite zu einer Abgabeseite.

Für eine erfolgreiche Ernte des Gutes ist eine hohe Lagerfähigkeit und damit ein möglichst geringer Feuchtegehalt des Erntegutes bei den heute üblichen hohen Pressdichten, insbesondere bei Rundballen, Quaderballen oder in der Silage, unbedingt erforderlich. Ansonsten droht Schimmelbefall, wodurch das Erntegut unbrauchbar wird.

Sobald das Halmgut geschnitten und durch die Sonne getrocknet oder zumindest angetrocknet ist, kommt üblicherweise ein Schwader zum Einsatz, der das Halmgut in einer großen Arbeitsbreite von bis zu ca. 10 m zu einem Streifen, dem sogenannten Schwaden, von ca. 2 m Breite zusammenschiebt.

Durch das weite Bewegen des Erntegutes über den Boden und durch die hohe Fahrgeschwindigkeit des Zugfahrzeuges wird das Erntegut zusammengedrückt. Das Nachtrocknen im Schwad ist dadurch nur noch eingeschränkt möglich. Insbesondere die unteren Schichten können so kaum trocknen, wobei der Schwad zudem auch zusätzliche Feuchtigkeit vom Boden aufnehmen kann.

Auch bei großen Mähdreschern liegt die Breite des Strohschwades immer bei ca. 2 m, sodass die Höhe bei größerer Menge zunimmt. Dadurch, dass die Schwaden des Mähdreschers nicht breiter, sondern höher und dichter werden, wirken auf die bodennahen Schichten in dem Schwad höhere Drücke. Durch den Druck auf die unteren Schichten kann die Feuchtigkeit auch bei ansonsten optimaler Belüftung und Sonneneinstrahlung nicht entweichen.

Meist behilft man sich mit Kreiselschwadern, in denen man den Strohschwad dann verlagert und etwas dreht. Eine Lockerung erreicht man allerdings nur scheinbar, denn in der Mitte des Schwades tritt eher eine Verdichtung ein. Durch den unebenen Ackerboden im Vergleich zum Grasland ist oftmals eine Einmischung von Erde oder Sand in das Halmgut unvermeidlich.

Bei den sogenannten Schwadlüftern nimmt ein mit Federzinken besetzter, sich schnell drehender Rotor das Erntegut auf und schlägt es oberhalb des Rotors gegen das halbrunde Maschinengehäuse nach hinten wieder aus. Das Erntegut wird stark beschleunigt und dann mit hoher Geschwindigkeit wieder abgelegt. Zugleich wird das Erntegut dadurch beim Ablegen durch die hohe Geschwindigkeit am Boden durch den Abbremsvorgang wieder zusammengeschoben. Das Erntegut ist außerdem durch den Rotor angebrochen und gegebenenfalls zerkleinert worden. Kleinere Bestandteile fallen zwischen die Stoppeln, sind für eine Ernte nicht mehr erreichbar und verbleiben somit auf dem Feld.

Es sind auch bereits Vorrichtungen als an einen Schlepper anbaubare oder anhängbare Anbaugeräte bekannt, die halm- und/oder blattförmiges Erntegut wie beispielsweise geschnittenes Gras, Heu oder Stroh vom Boden aufsammeln und in Schwaden ablegen können. Dabei wird das Erntegut nicht direkt auf dem Boden liegend zu einem Schwad zusammengerecht, sondern zunächst vom Boden aufgesammelt und anschließend quergefördert und in einem Schwad abgelegt. Solche auch als Merger bezeichneten Vorrichtungen ermöglichen eine hohe Futter- bzw. Erntegutqualität, da Verunreinigungen wie Steine oder Erdklumpen weniger leicht in den Schwad gelangen, wenn das Erntegut vor dem Querfördern zunächst vom Boden angehoben wird.

Die DE 459 234 A offenbart bereits eine landwirtschaftliche Vorrichtung mit einem Aufnehmer für das Halmgut, das von einem ersten Fördermittel auf ein in einer Ebene unterhalb angeordnetes, zweites Fördermittel fällt, welches mit unterschiedlicher Geschwindigkeit zu dem ersten Fördermittel antreibbar ist. Dadurch soll sichergestellt werden, dass mit einer nachfolgenden Schleudertrommel stets eine Heuschicht von geeigneter Dicke bearbeitet werden kann. Soll ein Heuhaufen ausgebreitet werden, so ist die Geschwindigkeit des ersten Förderbandes geringer als die des zweiten, weil sonst eine zu dicke Heuschicht der Trommel zugeführt würde.

Weiterhin offenbart die EP 1 306 003 A1 eine Ballenpresse für landwirtschaftliches Erntegut mit einer Pickup-Trommel, einem umlaufenden Erntegutförderorgan sowie mit einer diesem nachgeordneten Schneid- und/oder Fördereinrichtung, wobei dem Erntegutförderorgan im rückwärtigen Bereich oberseitig eine Niederhaltetrommel zugeordnet ist. Dadurch wird sichergestellt, dass das von dem Erntegutförderorgan transportierte Erntegut in dessen rückwärtigen Bereich sicher abgegeben und den nachgeordneten Arbeitsorganen zugeführt wird.

Aus der DE 103 200 42 A1 ist eine landwirtschaftliche Vorrichtung als Kombination eines Kreisels bzw. Wenders mit einem Schwader bekannt, dessen Aufnehmer um eine horizontale Achse drehbare Zinken zur Aufnahme des Halmgutes umfasst.

Ferner ist aus der DE 1 902 441 A eine Vorrichtung zum Streuen, Wenden und Schwaden von Gras, Heu, Stroh oder sonstigem Schnittgut bekannt, die eine Einrichtung zum Erzeugen von Wirbel-, Saug- und/oder -Druckluftströmen zum Anheben und Herumschleudern des Schnittgutes aufweist. Hierzu dient ein mehrflügeliger Rotor mit tunnelförmig gebogenen Blechstücken, die sich im Wesentlichen über die gesamte Breite der Maschine hinweg erstrecken.

Der Erfindung liegt die Aufgabe zugrunde, eine Möglichkeit zu schaffen, eine Vorrichtung zur Verfügung zu stellen, durch die auch dichte Schwaden zuverlässig, wirkungsvoll und schonend gelockert werden können, sodass diese schnell durch Wind und Sonneneinstrahlung getrocknet werden können.

Diese Aufgabe wird erfindungsgemäß mit einer Vorrichtung gemäß den Merkmalen des Anspruches 1 gelöst. Die weitere Ausgestaltung der Erfindung ist den Unteransprüchen zu entnehmen.

Erfindungsgemäß ist also eine Vorrichtung vorgesehen, bei der das Ernte- oder Halmgut mittels einer oberhalb des Aufnehmers angeordneten, rotationsbeweglich antreibbaren Wendeeinrichtung auf eine Auflage gefördert wird und in Förderrichtung des Ernte- oder Halmgutes hinter der Wendeeinrichtung eine rotationsbeweglich antreibbare Fördereinrichtung angeordnet ist, durch die das Ernte- oder Halmgut der Abgabeseite zugeführt wird. Erfindungsgemäß wird somit zunächst das von dem rotierenden Aufnehmer aufgenommene Ernte- oder Halmgut nach oben beschleunigt und trifft dort auf die Wendeeinrichtung. Hierdurch wird das Ernte- oder Halmgut nicht lediglich wie beim Stand der Technik in Richtung einer Raumachse gefördert, sondern erhält zusätzlich einen Drehimpuls, welcher insbesondere durch die Drehzahl der beispielsweise als Wendetrommel ausgeführten Wendeeinrichtung einstellbar ist. Dadurch lässt sich eine zuvor bodennahe Schicht des Ernte- oder Halmgutes zuverlässig in einer obere Position drehen. In der Folge erfährt diese neue Schichtung aufgrund der beispielsweise als Fördertrommel ausgeführten Fördereinrichtung eine Beschleunigung auf der als Unterlage dienenden Auflagefläche, wodurch es zu einer Reduzierung der Schichtdicke kommt. Insbesondere wird also das Ernte- oder Halmgut räumlich gestreckt und fällt anschließend im Abgabebereich der Abgabeseite in einer lockeren Schichtung, ähnlich wie bei einem Mähdrescher, von oben nach unten zu Boden. Vorzugsweise befindet sich die Fallhöhe in dem Abgabebereich zwischen den Fahrspuren bzw. den Rädern der an einem Anhänger angeordneten Vorrichtung.

Dabei erweist es sich als besonders Erfolg versprechend, wenn die Auflage in Förderrichtung eine Neigung, insbesondere eine Steigung aufweist und somit das Ernte- oder Halmgut in Richtung der Abgabeseite weiter nach oben gefördert wird, sodass sich auf diese Weise die Fallhöhe im Abgabebereich steigern lässt. Hierdurch wird die Durchmischung weiter verbessert und die so erzeugte Schichtung weiter aufgelockert, die so erhalten bleibt.

Besonders bevorzugt ist die Neigung der Auflage insbesondere stufenlos einstellbar. Hierdurch kann die gewünschte Fallhöhe sowie auch die sich aufgrund des Neigungswinkels einstellende Schichtstärke beliebig, auch während des Betriebes der Vorrichtung, eingestellt werden. Umgekehrt kann ein Gefälle in Richtung der Abgabeseite auch zur Reduzierung der Schichthöhe genutzt werden.

Eine weitere, ebenfalls besonders vorteilhafte Ausführungsform der Erfindung wird auch dadurch erreicht, dass die Wendeeinrichtung und/oder die Fördereinrichtung einen einstellbaren Abstand zu dem Aufnehmer und/oder der Auflage aufweist, um so den Förderspalt zwischen dem Aufnehmer und der Auflage einerseits und der Wendeeinrichtung und der Fördereinrichtung andererseits bedarfsgerecht einstellen zu können. Beispielsweise kann der Förderspalt an die jeweiligen Eigenschaften verschiedenen Ernte- oder Halmgutes sowie insbesondere an den Feuchtegehalt angepasst werden.

Darüber hinaus hat es sich bereits als besonders Erfolg versprechend erwiesen, wenn die Wendeeinrichtung und die Fördereinrichtung einen einstellbaren Abstand und/oder eine Orientierung zueinander aufweisen, sodass die Effizienz bei der Förderung des Ernte- oder Halmgutes an dessen Eigenschaften optimal angepasst werden kann. So können beispielsweise verhältnismäßig große Stücke mit einem entsprechend vergrößerten Abstand der Wendeeinrichtung und der Fördereinrichtung zuverlässiger transportiert werden, während umgekehrt bei kleinen Stücken ein geringer Abstand zu bevorzugen ist, weil es anderenfalls zu unerwünschten Anhäufungen aufgrund verminderter Transportwirkung der Fördereinrichtung kommen kann.

In der Praxis hat sich bereits eine Ausgestaltungsform bewährt, bei welcher die Wendeeinrichtung und die Fördereinrichtung an einem gemeinsamen Tragarm schwenkbeweglich angeordnet sind, sodass eine synchrone Einstellung des Förderspaltes mit geringem Aufwand realisierbar ist. An dem Tragarm kann die Wendeeinrichtung und/oder die Fördereinrichtung zusätzlich verschiebbar angeordnet sein, um so den Abstand zu verändern. Darüber hinaus ist auch eine Kopplung des Tragarmes mit der Auflage möglich, sodass der Förderspalt bei verschiedenen Orientierungen der Auflage unverändert erhalten bleibt. Der Tragarm ist hierzu insbesondere um eine horizontale Achse quer zur Förderrichtung des Ernte- oder Halmgutes schwenkbeweglich. Außerdem kann der Tragarm mit einer vorbestimmten Federkraft in Richtung auf das Ernte- oder Halmgut ausgerichtet sein, sodass sich der Förderspalt bei einer unbeabsichtigten Anhäufung des Ernte- oder Halmgutes selbsttätig erweitert.

Eine andere, ebenfalls besonders Erfolg versprechende Ausgestaltungsform der Erfindung wird auch dadurch erreicht, dass der Aufnehmer und die Wendeeinrichtung gegenläufig antreibbar sind, sodass in dem Förderspalt ähnlich einer Düsenwirkung eine Beschleunigung aufgrund des sich verengenden Förderspaltes mit einer homogenen Beschleunigung erreicht wird. Dadurch wird eine unkontrollierte Streuung des Ernte- oder Halmgutes vermieden. Dabei können gegebenenfalls die vorhandenen Gabeln oder sonstige Vorsprünge an dem Aufnehmer und der Wendeeinrichtung kämmend ineinandergreifen.

Eine Teilmenge des Erntegutes wird von der Wendetrommel nach vorn geschlagen, erneut aufgenommen und gefördert. Das Erntegut, welches von der Aufnahme nicht so hoch geworfen wird, wird auch nicht von der Wendetrommel erfasst. Es wird somit durch den Schwung der Aufnahme nach hinten geworfen und der Fördertrommel zugeführt. Dadurch entsteht in dem abgelegten Schwad eine andere Schichtung.

Dabei wird eine Teilmenge durch die Wendetrommel in Fahrtrichtung nach vorn gefördert, wodurch eine extreme Wendung erreicht wird. Eine Übermenge des Erntegutes wird immer entgegen der Fahrtrichtung nach hinten gefördert und verlässt die Vorrichtung, wobei stets eine Wendung erreicht wird.

Eine weitere besonders praxisgerechte Ausgestaltungsform der Erfindung wird auch dann erreicht, wenn der Aufnehmer einen einstellbaren Bodenabstand aufweist, um so die Schichtstärke des aufgenommenen Ernte- oder Halmgutes variabel einstellen oder eine Anpassung an die Bodenbeschaffenheit vornehmen zu können. Dabei kann die Einstellung manuell oder selbsttätig mittels einer Kontaktrolle erfolgen.

Obwohl selbstfahrende Varianten der Erfindung vom Schutzumfang uneingeschränkt umfasst sind, ist gemäß einer besonders Erfolg versprechenden Variante die Vorrichtung als ein mit einem Zugfahrzeug koppelbarer Anhänger ausgeführt, wobei die angetriebenen Einrichtungen mittels eines Nebenabtriebes des Zugfahrzeuges mit der erforderlichen Antriebsleistung versorgt werden.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig. 1: eine Seitenansicht der erfindungsgemäßen Vorrichtung zur Behandlung von Erntegut;
- Fig. 2: eine Draufsicht auf die in Figur 1 gezeigte Vorrichtung.

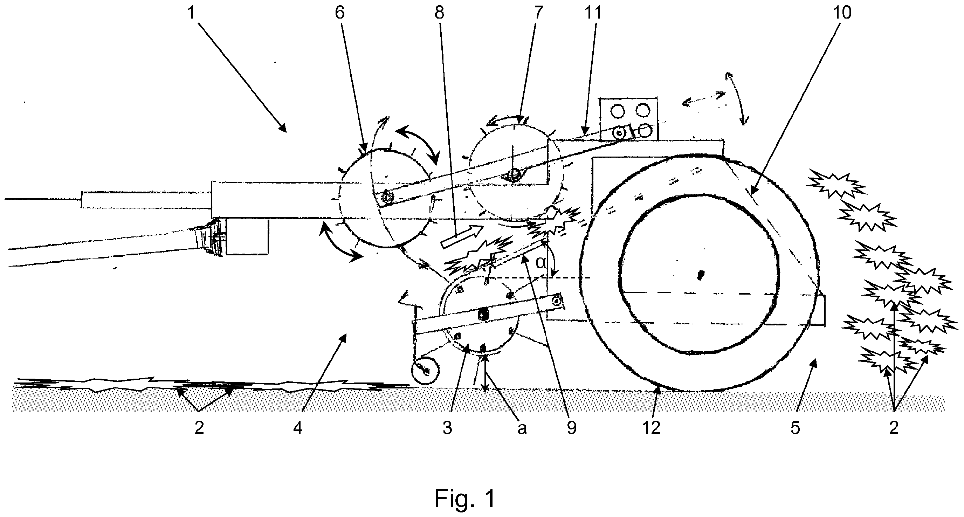

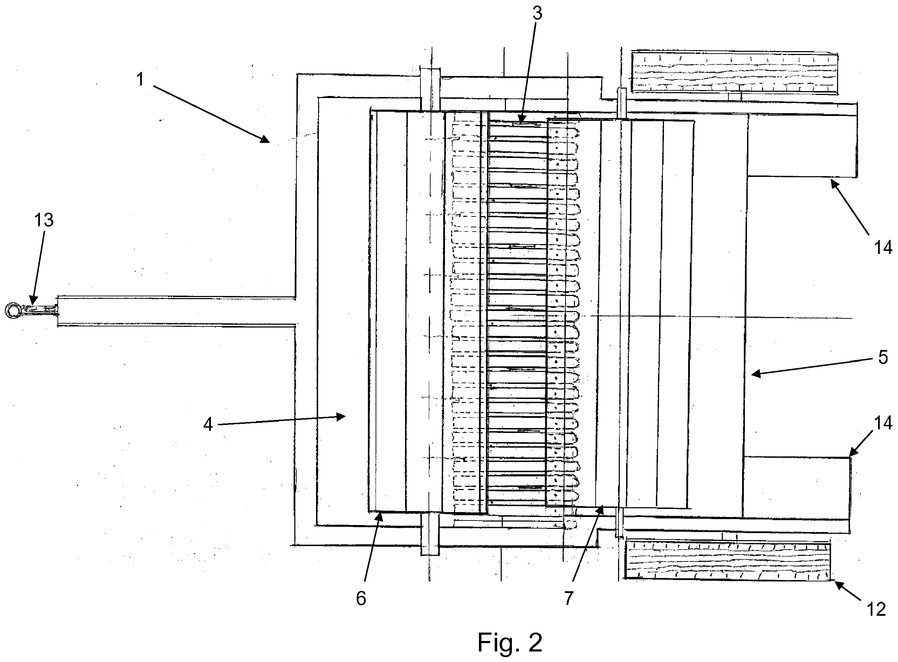

Eine erfindungsgemäße mobile landwirtschaftliche Vorrichtung 1 zur Behandlung von Ernte- oder Halmgut 2, insbesondere in der Heu-, Silage- oder Strohernte, mit einem rotationsbeweglichen Aufnehmer 3 für das Halmgut 2 sowie mit einem Fördermittel zum Transport des Halmgutes 2 von einer dem Aufnehmer 3 zugewandten Ladeseite 4 zu einer Abgabeseite 5 wird nachstehend anhand der Figuren 1 und 2 näher erläutert.

Erfindungsgemäß wird erstmals eine Vorrichtung 1 geschaffen, die auch dichte Schwaden zuverlässig lockert und dabei schonend auf das Erntegut 2 wirkt, indem das Halmgut 2 zunächst mittels einer Wendeeinrichtung 6 sowie einer Fördereinrichtung 7 auf eine ausreichende Fallhöhe zwischen 1 m und 3 m gebracht wird. Durch den auf das Halmgut 2 ausgeübten Dralleffekt wird die Schichtung des Halmgutes 2 geändert oder dessen Lage gedreht, sodass insbesondere die zuvor feuchten unteren Schichten weiter oben liegen.

Die dabei wirkenden Kräfte beschränken sich auf die Schwerkraft, sodass eine unerwünschte Schädigung, Verdichtung oder Zerkleinerung zuverlässig vermieden werden kann. Die durch die Fallhöhe lockeren und hoch aufliegenden Schwaden werden dann sehr schnell und sicher von der Sonne und vom Wind erfasst. Insbesondere liegt bei Stroh oder Heu oder auch beim Schwaddruschverfahren das Halmgut 2 nach der Behandlung wieder auf den Stoppeln derart locker auf, dass der Wind den gesamten Schwad durchdringen kann.

Die rotierende Wendeeinrichtung 6 und Fördereinrichtung 7 sind vorzugsweise als in Längsrichtung nebeneinanderliegende rotierende Walzen, quer zur Förderrichtung 8 ausgerichtet und insbesondere als Trommel mit Querleisten ausgeführt.

Nachdem das Erntegut 2 mit dem als Pikup ausgeführten Aufnehmer 3 aufgenommen worden ist, gelangt das Ernte- oder Halmgut 2 zu der als Wendetrommel ausgeführten Wendeeinrichtung 6. Die Breite der Wendeeinrichtung 6 entspricht dabei der Breite des Aufnehmers 3. Der Bodenabstand a des Aufnehmers 3 ist hierzu einstellbar.

Das Erntegut 2 wird entsprechend dem Neigungswinkel α einer Auflage 9 mittels der sich ebenfalls über die gesamte Breite erstreckenden, durch eine Fördertrommel gebildete Fördereinrichtung 7 in eine höhere Position gefördert, damit es an der Abgabeseite 5 eine größere Fallhöhe hat, wobei bedarfsweise mehrere Fördereinrichtungen hintereinander vorgesehen sein können.

Das geförderte Erntegut entschleunigt sich in der Aufwärtsbewegung und nachfolgendem freien Fall und wird nicht zusammengeschoben.

Der Neigungswinkel α der Auflage 9 kann bedarfsweise verändert werden, sodass die Fallhöhe an der Abgabeseite 5 entsprechend dem zu verarbeitenden Erntegut 2 oder der jeweiligen Einsatzbedingungen variabel einstellbar ist. Dabei führt eine höhere Fallhöhe grundsätzlich zu einer zusätzlichen Auflockerung und zu einer größeren Streuung.

Weiterhin hat die Vorrichtung 1 seitliche, den Abgabebereich lateral einschließende, durch Formbleche gebildete Leitelemente 10 mit Formblechen 14, die auch zur seitlichen Begrenzung der Abgabebreite des Erntegutes 2 dienen.

Die Förderrichtung 8 und die Fördereinrichtung 7 weisen jeweils eine variable Drehzahl gegenüber dem Aufnehmer 3 und die Auflage 9 einen variablen Neigungswinkel α gegenüber der Horizontalen auf, um so eine optimale Anpassung an unterschiedliches Erntegut 2 vornehmen zu können.

Hierzu sind die Förderrichtung 8 und die Fördereinrichtung 7 beispielsweise an einem gemeinsamen Tragarm 11 oder einzeln unabhängig voneinander schwenkbeweglich angeordnet.

Indem die Wendeeinrichtung 6 und die Fördereinrichtung 7 gegenläufig angetrieben werden, lässt sich in einfacher Weise eine effiziente Drehung des Erntegutes 2 erreichen. Somit gelangt das obere trockenere Erntegut 2 aus dem Schwad nach unten und das untere feuchtere Erntegut vermehrt nach oben. Die Wirkung der Sonne und des Windes wird dadurch wesentlich effektiver. Außerdem erreicht man eine veränderte Position und Orientierung der Halme in dem Erntegut 2, sodass das Erntegut sehr locker und luftig und mit größerer Höhe in dem neuen Schwad abgelegt wird, wobei ein unerwünschtes Aussieben und Brechen der Halme des Erntegutes 2 vermieden wird.

Darüber hinaus ist es auch möglich, die Auflage 9 seitlich schwenkbar auszuführen, um den erzeugten neuen Schwad seitlich von dem zuvor aufgenommenen alten Schwad abzulegen, was für bestimmte Gebiete, Früchte oder Arbeitsweisen vorteilhaft ist. Für den Transport auf öffentlichen Straßen kann die Auflage 9 eingeschwenkt und verriegelt werden.

Die Vorrichtung 1 ist mit einem Fahrgestell 12 ohne eigene Antriebseinheit ausgestattet und wird im Betrieb mittels einer Kupplung 13 mit einem nicht dargestellten Zugfahrzeug verbunden.

### BEZUGSZEICHENLISTE

- 1: Vorrichtung
- 2: Ernte- oder Halmgut
- 3: Aufnehmer
- 4: Ladeseite
- 5: Abgabeseite
- 6: Wendeeinrichtung
- 7: Fördereinrichtung
- 8: Förderrichtung
- 9: Auflage
- 10: Leitelement
- 11: Tragarm
- 12: Fahrgestell
- 13: Kupplung
- 14: Formblech
- a: Bodenabstand
- α: Neigungswinkel

## Patentansprüche

1. Eine bei der Behandlung von Ernte- oder Halmgut (2), insbesondere in der Heu-, Silage- oder Strohernte einsetzbare mobile landwirtschaftliche Vorrichtung (1) mit einem rotationsbeweglichen Aufnehmer (3) für das Ernte- oder Halmgut (2) sowie mit einem Fördermittel zum Transport des Ernte- oder Halmgutes (2) von einer dem Aufnehmer (3) zugewandten Ladeseite (4) zu einer Abgabeseite (5), wobei das Fördermittel eine oberhalb des Aufnehmers (3) angeordnete, rotationsbeweglich antreibbare Wendeeinrichtung (6) aufweist, durch die eine zuvor bodennahe Schicht des Ernte- oder Halmgutes in eine obere Position drehbar ist und durch die das Ernte- oder Halmgut (2) auf eine Auflage (9) der Vorrichtung (1) gefördert werden kann
und dass in Förderrichtung (8) des Ernte- oder Halmgutes (2) hinter der Wendeeinrichtung (6) eine rotationsbeweglich antreibbare Fördereinrichtung (7) angeordnet ist, durch die das Ernte- oder Halmgut (2) der Abgabeseite (5) zugeführt und in eine höhere Position gefördert werden kann,
damit es an der Abgabeseite (5) eine größere Fallhöhe hat.

2. Vorrichtung (1) nach Anspruch 1, **dadurch gekennzeichnet, dass** die Auflage (9) in Förderrichtung (8) eine Neigung (α), insbesondere eine Steigung aufweist.

3. Vorrichtung (1) nach Anspruch 2, **dadurch gekennzeichnet, dass** die Neigung (α) der Auflage (9) insbesondere stufenlos einstellbar ist.

4. Vorrichtung (1) nach zumindest einem der vorhergehenden Ansprüche, **dadurch gekennzeichnet, dass** die Wendeeinrichtung (6) und/oder die Fördereinrichtung (7) einen einstellbaren Abstand zu dem Aufnehmer (3) und/oder der Auflage (9) aufweist.

5. Vorrichtung (1) nach zumindest einem der vorhergehenden Ansprüche, **dadurch gekennzeichnet, dass** die Wendeeinrichtung (6) und die Fördereinrichtung (7) einen einstellbaren Abstand, eine einstellbare Geschwindigkeit und/oder eine einstellbare Orientierung zueinander aufweisen.

6. Vorrichtung (1) nach zumindest einem der vorhergehenden Ansprüche, **dadurch gekennzeichnet, dass** das Erntegut (2) durch den Aufnehmer (3) vom Boden aufgenommen und dadurch in eine höhere Position gefördert wird.

7. Vorrichtung (1) nach zumindest einem der vorhergehenden Ansprüche, **dadurch gekennzeichnet, dass** die Wendeeinrichtung (6) und die Fördereinrichtung (7) an einem Tragarm (11) gemeinsamen schwenkbeweglich angeordnet sind.

8. Vorrichtung (1) nach zumindest einem der vorhergehenden Ansprüche, **dadurch gekennzeichnet, dass** der Aufnehmer (3) und die Wendeeinrichtung (6) gegenläufig antreibbar sind.

9. Vorrichtung (1) nach zumindest einem der vorhergehenden Ansprüche, **dadurch gekennzeichnet, dass** der Aufnehmer (3) einen einstellbaren Bodenabstand (a) aufweist.

10. Vorrichtung (1) nach zumindest einem der vorhergehenden Ansprüche, **dadurch gekennzeichnet, dass** die Vorrichtung (1) als ein mit einem Zugfahrzeug koppelbarer Anhänger und/oder selbstfahrend ausgeführt ist.

## Claims

1. Mobile agricultural apparatus (1) which is usable in the treatment of harvested crop or stalk material (2), in particular in the harvesting of hay, silage or straw, having a rotatable pick-up (3) for the harvested crop or stalk material (2), and having a conveying means for transporting the harvested crop or stalk material (2) from a loading side (4) facing the pick-up (3) to a dispensing side (5), wherein the conveying means has a turning device (6) which is arranged above the pick-up (3), is drivable rotatably and by means of which a layer of the harvested crop or stalk material that was previously close to the ground is rotatable into an upper position and by means of which the harvested crop or stalk material (2) can be conveyed onto a support (9) of the apparatus (1), and in that a conveying device (7) which is drivable rotatably is arranged behind the turning device (6) in the conveying direction (8) of the harvested crop or stalk material (2), by means of which conveying device the harvested crop or stalk material (2) can be supplied to the dispensing side (5) and conveyed into a higher position so that it has a greater drop height on the dispensing side (5).

2. Apparatus (1) according to Claim 1, **characterized in that** the support (9) has an inclination (α), in particular a slope, in the conveying direction (8).

3. Apparatus (1) according to Claim 2, **characterized in that** the inclination (α) of the support (9) is adjustable in particular infinitely variably.

4. Apparatus (1) according to at least one of the preceding claims, **characterized in that** the turning device (6) and/or the conveying device (7) have/has an adjustable distance to the pick-up (3) and/or to the support (9).

5. Apparatus (1) according to at least one of the preceding claims, **characterized in that** the turning device (6) and the conveying device (7) have an adjustable distance, an adjustable speed and/or an adjustable orientation with respect to each other.

6. Apparatus (1) according to at least one of the preceding claims, **characterized in that** the harvested crop (2) is picked up from the ground by the pick-up (3) and is conveyed as a result into a higher position.

7. Apparatus (1) according to at least one of the preceding claims, **characterized in that** the turning device (6) and the conveying device (7) are arranged pivotably on a common supporting arm (11).

8. Apparatus (1) according to at least one of the preceding claims, **characterized in that** the pick-up (3) and the turning device (6) are drivable in an opposed manner.

9. Apparatus (1) according to at least one of the preceding claims, **characterized in that** the pick-up (3) has an adjustable ground clearance (a).

10. Apparatus (1) according to at least one of the preceding claims, **characterized in that** the apparatus (1) is designed as a trailer which can be coupled to a towing vehicle and/or is designed to be self-propelling.

## Revendications

1. Dispositif agricole mobile (1) utilisable lors du traitement de produit de récolte ou de tige (2), notamment dans la récolte de foin, d'ensilage ou de paille, comprenant un ramasseur (3) mobile en rotation pour le produit de récolte ou de tige (2) ainsi que comprenant un moyen d'acheminement pour le transport du produit de récolte ou de tige (2) d'un côté de chargement (4) tourné vers le ramasseur (3) vers un côté de distribution (5), le moyen d'acheminement présentant un appareil de retournement (6) agencé au-dessus du ramasseur (3), pouvant être entraîné en rotation, par lequel une couche du produit de récolte ou de tige, auparavant proche du sol, peut être tournée dans une position supérieure et par lequel le produit de récolte ou de tige (2) peut être acheminé sur un support (9) du dispositif (1),
et, dans la direction d'acheminement (8) du produit de récolte ou de tige (2), un appareil d'acheminement (7) pouvant être entraîné en rotation étant agencé derrière l'appareil de retournement (6), par lequel le produit de récolte ou de tige (2) peut être amené au côté de distribution (5) et acheminé dans une position plus élevée, afin qu'il ait une hauteur de chute plus importante sur le côté de distribution (5).

2. Dispositif (1) selon la revendication 1, **caractérisé en ce que** le support (9) présente une inclinaison (α), notamment une pente, dans la direction d'acheminement (8).

3. Dispositif (1) selon la revendication 2, **caractérisé en ce que** l'inclinaison (α) du support (9) est notamment réglable en continu.

4. Dispositif (1) selon au moins l'une quelconque des revendications précédentes, **caractérisé en ce que** l'appareil de retournement (6) et/ou l'appareil d'acheminement (7) présentent une distance réglable par rapport au ramasseur (3) et/ou au support (9).

5. Dispositif (1) selon au moins l'une quelconque des revendications précédentes, **caractérisé en ce que** l'appareil de retournement (6) et l'appareil d'acheminement (7) présentent une distance réglable, une vitesse réglable et/ou une orientation réglable l'un par rapport à l'autre.

6. Dispositif (1) selon au moins l'une quelconque des revendications précédentes, **caractérisé en ce que** le produit de récolte (2) est ramassé au sol par le ramasseur (3) et est ainsi acheminé dans une position plus élevée.

7. Dispositif (1) selon au moins l'une quelconque des revendications précédentes, **caractérisé en ce que** l'appareil de retournement (6) et l'appareil d'acheminement (7) sont agencés sur un bras porteur (11) de manière à pouvoir pivoter ensemble.

8. Dispositif (1) selon au moins l'une quelconque des revendications précédentes, **caractérisé en ce que** le ramasseur (3) et l'appareil de retournement (6) peuvent être entraînés en sens inverse.

9. Dispositif (1) selon au moins l'une quelconque des revendications précédentes, **caractérisé en ce que** le ramasseur (3) présente une distance au sol (a) réglable.

10. Dispositif (1) selon au moins l'une quelconque des revendications précédentes, **caractérisé en ce que** le dispositif (1) est réalisé sous la forme d'une remorque pouvant être accouplée à un véhicule tracteur et/ou sous forme automotrice.
